# EUROPEAN PATENT SPECIFICATION

(11) **EP 2 933 321 B1**
(45) Date of publication and mention of the grant of the patent: **13.02.2019**
(21) Application number: 13862677.5
(22) Date of filing: 16.12.2013
(51) Int. Cl.: C10M 169/00, C10M 101/02, C10M 115/08, C10M 117/02, C10M 135/10, C10M 137/08, C10M 159/24, F16C 19/00, F16C 33/66, C10N 10/04, C10N 20/02, C10N 30/00, C10N 30/06, C10N 50/10

(54) **GREASE COMPOSITION AMELIORATING LOW-TEMPERATURE FRETTING**
SCHMIERFETTZUSAMMENSETZUNG ZUR VERBESSERUNG VON NIEDRIGTEMPERATUR-VERSCHLEISS
COMPOSITION DE GRAISSE AMÉLIORANT L'USURE DE CONTACT À BASSE TEMPÉRATURE

(30) Priority: 14.12.2012 JP 2012273916
(43) Date of publication of application: 21.10.2015
(73) Proprietor: Kyodo Yushi Co., Ltd., Kanagawa 251-8588 (JP)
(72) Inventor: OHYAMA Shinichi, Fujisawa-shi Kanagawa 251-8588 (JP)
(74) Representative: Mewburn Ellis LLP
(86) International application number: PCT/JP2013/083657
(87) International publication number: WO 2014/092201

(56) References cited:
- EP-A1- 1 847 586
- EP-A1- 2 465 916
- WO-A1-2010/001784
- WO-A1-2012/029940
- JP-A- H05 140 556
- JP-A- 2007 177 040
- JP-A- 2008 143 927
- JP-A- 2008 144 808
- JP-A- 2008 274 140
- US-A- 2 824 068
- US-A- 4 514 312

## Description

### [Technical Field]

The present invention relates to a grease composition with excellent anti-fretting properties, which can be used widely for various portions of parts subject to minute vibration, such as sliding portions, connecting portions, fitting portions and the like.

### [Background Art]

Motorcars, electrical machinery, and a variety of mechanical parts and products are often transported by train or truck. During the transportation, fretting may occur on the grease-applied parts to be lubricated due to vibration induced by rail joints and rough roads.

The fretting is a surface damage induced under a minute amplitude of vibration, to generate oxidized debris in the air, which is said to often cause considerable corrosion by the abrasive action (Yuji Yamamoto et al., "Tribology" Rikogakusha Publishing Co., Ltd., issued on 28, Feb. 1998, pp. 201-203).

Some measures are proposed to prevent the fretting corrosion, for example, (1) decreasing the relative amplitude of sliding motion, (2) separating the contact surfaces not to come in a direct contact therewith, (3) coating the contact surfaces with a phosphate coating or the like or supplying a lubricating oil or grease to prevent the surfaces from adhering to each other, and the like (Yuji Yamamoto et al., "Tribology" Rikogakusha Publishing Co., Ltd., issued on 28, Feb. 1998, pp. 201-203).

There is disclosed a grease composition with improved anti-fretting properties, comprising a urea type thickener, a base oil, a phosphorothioate compound and an amine compound (JP 2008-239687 A).

In recent years, however, there has been an increasing demand for prevention of the wear by fretting taking place under severe conditions (at -30°C or less, under an extremely minute amplitude of vibration) which has not been successfully prevented by any conventional grease compositions. In light of this, more satisfactory improvement is required for reduction of the fretting wear than that in the above-mentioned conventional techniques.

JP 2008 274140 A discloses a grease composition having particular composition using base oil, thickener and acidic phrophoric acid ester amine salt.

### [Summary of Invention]

### [Technical Problem]

The grease cannot readily flow into the portion to be lubricated at low temperatures because of extreme decrease of the flowability. Under a minute amplitude of vibration, it becomes difficult for the grease to properly flow again into the portion to be lubricated. This may easily cause the fretting wear. Therefore, an object of the invention is to provide a grease composition capable of more satisfactorily preventing the fretting wear that occurs under a minute amplitude of vibration at low temperatures than conventional grease compositions.

### [Solution to Problem]

The inventors of the present invention have improved the above-mentioned anti-fretting properties by adding an amine phosphate compound to a grease composition comprising a thickener and a base oil.

Accordingly, the invention provides the following grease composition and bearing:
1. A grease composition comprising a thickener, a base oil and an amine phosphate, wherein the thickener includes an alicyclic aliphatic diurea compound according to claim 1 - see item la below - wherein the thickener is contained in an amount of 2 to 35 mass% based on the total mass of the composition, and wherein the amine phosphate is contained in an amount of 0.05 to 10 mass% based on the total mass of the composition.
2. The grease composition described in the above-mentioned item 1, wherein the amine phosphate is tertiary alkylamine - dimethyl phosphate or phenylamine - phosphate.
3. The grease composition described in the above-mentioned item 1 or 2, wherein the amine phosphate is contained in an amount of 0.10 to 7 mass% based on the total mass of the composition.
4. The grease composition described in any one of the above-mentioned items 1 to 3, further comprising a metal salt of an organic sulfonic acid.
5. The grease composition described in the above-mentioned item 4, wherein the metal salt of the organic sulfonic acid is a calcium salt or a zinc salt.
6. The grease composition described in the above-mentioned item 5, wherein the metal salt of the organic sulfonic acid is a compound represented by the following formula (2):

   [R⁴-SO₃]₂M (2)

   wherein R⁴ is an alkyl group, alkenyl group, alkylnaphthyl group, dialkylnaphthyl group, alkylphenyl group or residual group of high-boiling petroleum distillate where the alkyl group or alkenyl group is a straight-chain or branched group having 2 to 22 carbon atoms; and M represents Ca or Zn.
7. The grease composition described in any one of the above-mentioned items 4 to 6, wherein the metal salt of the organic sulfonic acid is contained in an amount of 0.05 to 10 mass% based on the total mass of the composition.
   1a. In the grease composition described in item 1, the thickener includes a urea compound represented by the following formula (1) :

      R¹-NHCONH-R²-NHCONH-R³ (1)

      wherein R² is a bivalent aromatic hydrocarbon group having 6 to 15 carbon atoms; and R¹ represents an alkyl group having 6 to 30 carbon atoms and R³ represents cyclohexyl group.
8. The grease composition described in any one of the above-mentioned items 1 to 7, wherein the thickener includes a urea compound represented by formula (1-4) or (1-5) set out in claim 8 and the following description.
9. The grease composition described in any one of the above-mentioned items 1 to 8, wherein the base oil is a mineral oil, a synthetic oil or a mixture thereof and has a kinematic viscosity at 40°C of 30 to 200 mm²/s.
10. A rolling bearing where the grease composition described in any one of the above-mentioned items 1 to 9 is enclosed.
11. Use of the grease composition of any of items 1 to 9 in an automotive hub is also provided in the invention.

### [Effects of Invention]

The grease composition of the invention can more effectively prevent the fretting wear that occurs at low temperatures under a minute amplitude of vibration than the conventional grease compositions.

### [Description of Embodiments]

### [Thickener]

The thickener used in the invention includes an alicyclic aliphatic diurea compound according to claim 1. Specific examples of disclosed thickeners include soap type thickeners such as Li soaps and Li complex soaps, urea type thickeners such as diurea compounds, inorganic thickeners such as organoclay and silica, organic thickeners such as PTFE, and the like.

Disclosed herein are soap type thickeners such as Li soaps and Li complex soaps, and urea type thickeners such as diurea compounds.

The Li soaps such as lithium stearate, lithium 12-hydroxystearate and the like can be used, and in particular, lithium 12-hydroxystearate is preferable.

The Li complex soaps include complexes of lithium salts of aliphatic carboxylic acids such as stearic acid, 12-hydroxystearic acid and the like, with lithium salts of dibasic acids. Examples of the dibasic acids are succinic acid, malonic acid, adipic acid, pimelic acid, azelaic acid, sebacic acid, and the like. Of the above, azelaic acid and sebacic acid are preferred. Particularly, a mixture of a salt prepared from azelaic acid and lithium hydroxide and a salt prepared from 12- hydroxystearic acid and lithium hydroxide is preferably used as the Li complex soap.

As the urea type thickener, diurea compounds represented by the following formula (1) are used in the invention:

R¹-NHCONH-R²-NHCONH-R³ (1)

wherein R² is a bivalent aromatic hydrocarbon group having 6 to 15 carbon atoms; and R¹ represents an alkyl group having 6 to 30 carbon atoms and R³ represents
cyclohexyl group.

The groups indicated by the following structural formulas are advantageously used as the group R², and in particular, the following group shown in the center is preferred.

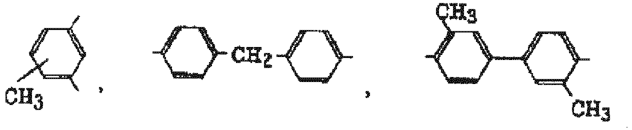

When R¹ is an alkyl group having 6 to 30 carbon atoms, the number of carbon atoms for the alkyl group may preferably be 8 to 20. In particular, the alkyl groups having 8 to 12 carbon atoms or the alkyl groups having 16 to 20 carbon atoms are preferable. Of the above, the alkyl group having 8 carbon atoms or 18 carbon atoms is most preferable.

The urea compounds specifically used in the invention include those represented by the following formulae (1-4) to (1-5). In particular, the urea compound of formula (1-5) is preferable. Also disclosed are diurea thickeners represented by formulae (1-1) to (1-3) and (1-6) to (1-13).)

### Aliphatic urea

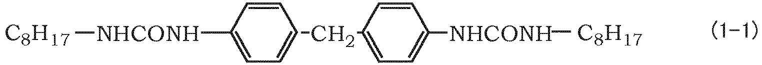

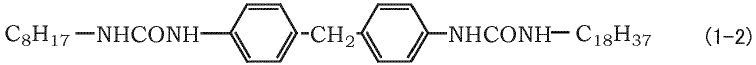

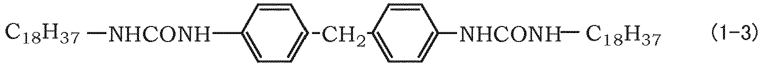

### Alicyclic aliphatic urea

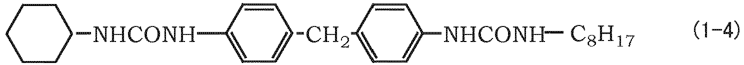

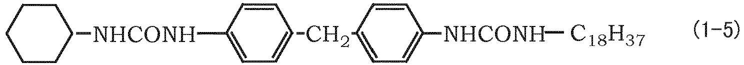

### Alicyclic urea

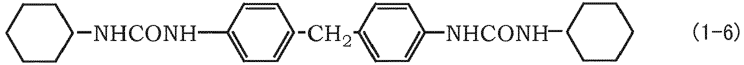

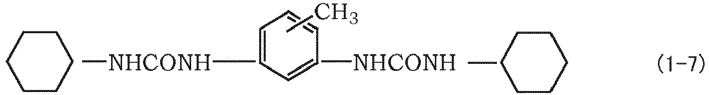

### Alicyclic aromatic urea

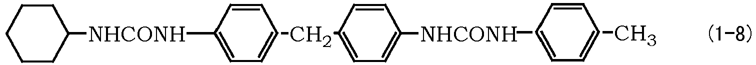

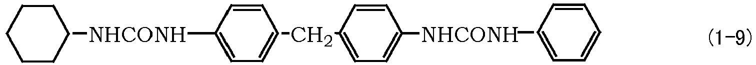

### Aromatic urea

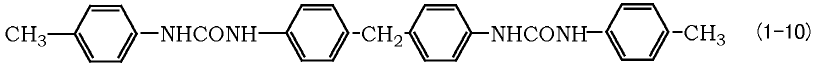

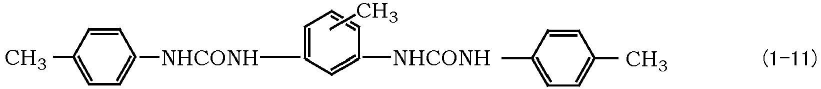

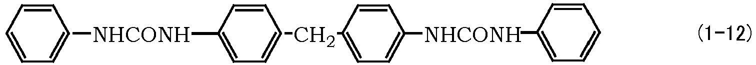

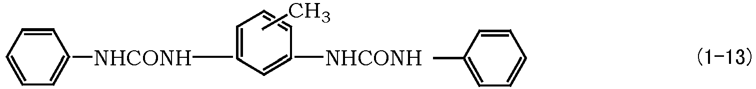

The urea thickener used in the invention can be obtained by reacting a monoamine with a diisocyanate at 10 to 200°C, for example. The method for the above-mentioned reaction is not particularly limited, and any conventional methods can be used for production. In this case, volatile solvents may be used, but when a base oil is used as the solvent, the base oil may advantageously be incorporated into the resultant composition of the invention.

Specific examples of the diisocyanate that can be used include aromatic diisocyanate compounds such as 2,4-tolylene diisocyanate, 2,6-tolylene diisocyanate, diphenylmethane-4,4'-diisocyanate, naphthylene-1,5-diisocyanate and the like, and the mixtures thereof. Examples of the monoamine include aliphatic amines such as octylamine, nonylamine, decylamine, undecylamine, tridecylamine, tetradecylamine, pentadecylamine, hexadecylamine, heptadecylamine, octadecylamine and the like; aromatic amines such as aniline, benzylamine, toluidine, chloroaniline and the like; and cyclohexylamine.

The content of the thickener in the composition of the invention is 2 to 35 mass %. Preferably, the thickener may be contained in such an amount that is necessary for adjusting the worked penetration of the resultant composition of the invention to 235 to 350, more preferably 280 to 325. Thus, the thickener may preferably be contained in an amount of 5 to 25 mass%, based on the total mass of the composition.

### [Base oil]

The base oil that can be used in the invention is not particularly limited. Mineral oils, synthetic oils and mixtures thereof can be used. Examples of the synthetic oils include ester type synthetic oils such as diesters and polyol esters, hydrocarbon synthetic oils such as poly α-olefins and polybutene, ether type synthetic oils such as alkyl diphenyl ethers and polypropylene glycols, silicone oils, fluorinated oils, and other kinds of synthetic oils.

According to the invention, mineral oils, poly α-olefins and polyol esters, and alkyldiphenyl ethers are preferably used.

Desirably, the base oil may have a kinematic viscosity at 40°C of 30 to 200 mm²/s, more preferably 30 to 100 mm²/s, and most preferably 30 to 80 mm²/s.

### [Amine phosphate]

The amine phosphate used in the invention is not particularly limited. Preferable examples of the amine phosphate include tertiary alkylamine - dimethyl phosphate, phenylamine - phosphate and the like. The tertiary alkylamine - dimethyl phosphate is more preferable. As the amine phosphate compound, commercially available products such as Vanlube 672 (tertiary alkylamine - dimethyl phosphate, made by R.T. Vanderbilt Holding Company, Inc.); Vanlube 692 (phenylamine phosphate, made by R.T. Vanderbilt Holding Company, Inc.) and the like are usable.

In the tertiary alkylamine - dimethyl phosphate, the number of carbon atoms for the tertiary alkyl moiety is not particularly limited, and may possibly be 1 to 24, for example.

In consideration of the effect, the content of the amine phosphate is 0.05 to 10 mass%, preferably 0.10 to 7 mass%, and more preferably 0.25 to 5 mass%, based on the total mass of the grease composition. With the content of less than 0.05 mass%, the fretting may not be reduced satisfactorily. However, when the content exceeds 10 mass%, the fretting prevention effect will be saturated although the effect can be obtained, so that the content of 10 mass% or less is economically advantageous.

### [Organic sulfonate]

Preferably, the grease composition of the invention may further comprise an organic sulfonate. The organic sulfonate is conventionally added as the rust inhibitor, but it is surprising that the presence of the organic sulfonate can further enhance the effect of preventing the fretting wear which occurs at low temperatures and under minute amplitude of vibration.

The organic sulfonate that can be used in the invention is not particularly limited, but the compounds represented by the following formula (2) are preferably used:

[R⁴-SO₃]₂M (2)

In the above formula, R⁴ is an alkyl group, alkenyl group, alkylnaphthyl group, dialkylnaphthyl group, alkylphenyl group or residual group of high-boiling petroleum distillate where the alkyl group or alkenyl group is a straight-chain or branched group having 2 to 22 carbon atoms. As the group represented by R⁴, an alkylphenyl group where the alkyl group has 6 to 18 carbon atoms, preferably 8 to 18 carbon atoms, and most preferably 10 to 18 carbon atoms is preferred. M represents Ca or Zn.

Especially, calcium salt or zinc salt of alkylbenzenesulfonic acid, calcium salt or zinc salt of dinonylnaphthalenesulfonic acid, or highly basic salts thereof are preferable.

The above-mentioned organic sulfonate includes salts of petroleum sulfonic acids obtainable by subjecting an aromatic hydrocarbon component in the lubricant oil distillate to sulfonation, or synthetic sulfonic acids such as dinonylnaphthalenesulfonic acid and heavy alkylbenzenesulfonic acid.

The organic sulfonate used in the invention includes metal salts and basic salts. The basic salts include highly basic salts (having a base number of 50 to 500 mgKOH/g). The basic and highly basic sulfonates are prepared by dispersing finely-divided particles of calcium carbonate or calcium hydroxide into sulfonates for imparting the acid-neutralizing effect.

In consideration of the effect, the content of the organic sulfonate may typically be 0.05 to 10 mass%, preferably 0.10 to 7 mass%, and more preferably 0.25 to 5 mass%, based on the total mass of the grease composition. With the content of less than 0.05 mass%, satisfactory prevention of the fretting may not be recognized. The organic sulfonate can be added in an amount of more than 10 mass%, but the fretting prevention effect will be uneconomically saturated even though so much amounts are added.

### [Additives]

If desired, the grease composition of the invention may further comprise other additives. The additives generally used for grease may be incorporated. For example, an antioxidant, rust inhibitor, metallic corrosion inhibitor, oilness improver, anti-wear agent, extreme pressure agent, and solid lubricant can be used. In particular, the antioxidant and/or the rust inhibitor may preferably be incorporated into the composition. It is not preferable to contain any phosphorothioate compound in the composition.

The contents of those additives are usually within the range of 0.1 to 20 mass% based on the total mass of the grease composition.

### [Antioxidant]

The antioxidant is known as an oxidative degradation inhibitor for grease. The antioxidant that can be used in the invention includes amine type antioxidants, phenol type antioxidants and the like. Examples of the amine type antioxidants include N-n-butyl-p-aminophenol, 4,4' -tetramethyl-di-aminodiphenylmethane, α-naphthylamine, N-phenyl-α-naphthylamine, phenothiazine and the like. Examples of the phenol type antioxidants include 2,6-di-t-butyl-p-cresol (BHT), 2,2'-methylenebis(4-methyl-6-t-butylphenol), 4,4' -butylidenebis(3-methyl-6-t-butylphenol), 2,6-di-t-butylphenol, 2,4-dimethyl-6-t-butylphenol, t-butylhydroxyanisole (BHA), 4,4'-butylidenebis(3-methyl-6-t-butylphenol), 4,4'-methylenebis(2,3-di-t-butylphenol), 4,4'-thiobis(3-methyl-6-t-butylphenol) and the like. The amine type antioxidants are preferred, and in particular, alkyldiphenylamine and N-phenyl-α-naphthylamine are preferably used.

In consideration of the effect and economy, the content of the antioxidant may usually be 0.1 to 5 mass%, preferably 0.5 to 4 mass%, and more preferably 1 to 3 mass%, based on the total mass of the composition according to the invention.

### [Rust inhibitor]

Incorporation of the rust inhibitor can provide a grease composition capable of preventing or reducing rust even when in contact with water. As the rust inhibitor, for example, amine type rust inhibitors, carboxylic acid and derivatives thereof; alkenylsuccinic anhydride, alkenylsuccinic acid esters, alkenylsuccinic acid half esters, carboxylates; amine salts and sulfonates of fatty acid, dibasic acid, naphthenic acid, lanolin fatty acid, alkenylsuccinic acid and the like; passivators; esters such as sodium nitrite, sodium molybdate and the like; metal corrosion inhibitors such as sorbitan trioleate, sorbitan monooleate and the like; benzotriazole or derivatives thereof, zinc oxide and the like may preferably be used.

In consideration of the effect and economy, the content of the rust inhibitor may usually be 0.05 to 5 mass%, preferably 0.10 to 4 mass%, and more preferably 0.25 to 3 mass%, based on the total mass of the grease composition of the invention.

Without wishing to be bound by any theory, it is considered that the invention can successfully reduce the fretting wear by the presence of the amine phosphate which can form a phosphate coating on the contact surfaces. In addition, use of the amine phosphate in combination with the organic sulfonate is considered to result in formation of the phosphate coating with more stability.

The grease composition of the invention advantageously has a wide range of applications in various portions of parts subject to minute vibration, such as sliding portions, connecting portions, fitting portions and the like. For example, the grease composition of the invention can be used for rolling bearings, bearings for a windmill, hub unit bearings for automobile, ball screws, linear motion guide bearings, a variety of gears, cams, constant velocity joints, journal bearings (plain bearings), universal joints, pistons, screws, wire ropes, chains and the like.

### [Examples]

### <Test grease compositions>

The compositions of the test greases are shown in the following Tables.

A mineral oil was used as the base oil. The base oil has a kinematic viscosity at 40°C of 60 mm²/s.

Three kinds of thickeners, i.e., an aromatic diurea, an alicyclic aliphatic diurea and a Li complex soap were used, the structures of which are shown below:
- Aromatic diurea 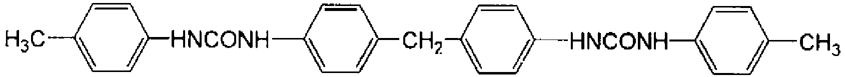
- Alicyclic aliphatic diurea 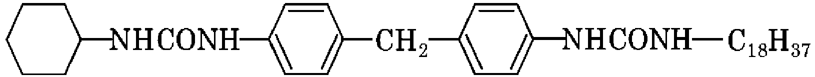
- Li complex soap

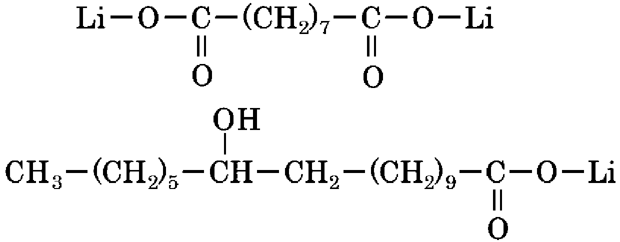

(A mixture of a salt of azelaic acid with lithium hydroxide, and a salt of 12-hydroxystearic acid with lithium hydroxide)

### [Amine phosphate]

- Amine phosphate A: tertiary alkylamine - dimethyl phosphate (Vanlube 672, made by R.T. Vanderbilt Holding Company, Inc.)
- Amine phosphate B: phenylamine - phosphate (Vanlube 692, made by R.T. Vanderbilt Holding Company, Inc.)

### [Organic sulfonic acid metal salt]

- Ca sulfonate A: calcium salt of dinonylnaphthalenesulfonic acid (base number: 0.26)
- Ca sulfonate B: calcium salt of highly basic alkylbenzenesulfonic acid where the alkyl moiety has 16 to 24 carbon atoms (base number: 405)
- Zn sulfonate: zinc salt of dinonylnaphthalenesulfonic acid (base number: 0.50)

The base number herein used is a value determined in accordance with JIS K2501.

To each composition, an alkyldiphenylamine was added as the antioxidant in an amount of 1 mass%, and an amine type rust inhibitor was added as the rust inhibitor in an amount of 1 mass%. The rest was compensated with the base oil.

All the grease compositions were adjusted to have a worked penetration of 300. The worked penetration was determined in accordance the JIS K2220.

To prepare the grease compositions containing the aromatic diurea as the thickener, the predetermined amounts of 4,4'-diphenylmethane diisocyanate and the raw material amine (p-toluidine) were allowed to react at a molar ratio of 1 to 2 in each base oil as shown in the following Tables. After the given amounts of amine phosphate, antioxidant and rust inhibitor were added, the resultant mixture was adjusted to have a predetermined consistency using a three-roll mill.

To prepare the grease compositions containing the alicyclic aliphatic diurea as the thickener, the procedures for preparation of the grease composition containing the aromatic diurea were repeated except that p-toluidine used as the raw material amine was replaced by cyclohexylamine and stearylamine. The molar ratio of cyclohexylamine to stearylamine for constituting the alicyclic aliphatic diurea compound was 7:1.

To prepare the grease compositions containing the lithium complex soap as the thickener, azelaic acid and 12-hydroxystearic acid were added to the base oil as shown in the following Tables, followed by heating, and then an aqueous solution of lithium hydroxide was added. After heated again, the resultant mixture was rapidly cooled to prepare the grease compositions.
Examples 1, 3, 9 and 11 represent reference examples.

### <Test methods>

### - Fafnir friction oxidation test (in accordance with ASTM D 4170)

Each test grease was applied to two test thrust bearings as shown below, and then the bearings were subjected to a prescribed oscillation motion to determine the abrasion wear (weight loss by the fretting wear).

### [Test conditions]

Bearing: ANDREWS W 5/8
Load: 2450 N (550 lbf) (contact pressure: 1861 MPa)
Angle of oscillation: ±1°
Oscillation cycle: 25 Hz
Duration: 22 hours
Temperature: -30°C
Filling amount of grease: 1.0 g per pair of bearings
Abrasion wear: weight loss of the race per pair of bearings (by dividing the total weight loss of the test bearing races by 2)

### <Test results>

The abrasion wear by fretting observed in Examples 1 to 16 employing the amine phosphate was smaller than that in Comparative Examples 1 to 3 where no additive was contained.

The abrasion wear by fretting observed in Examples 1 to 8 employing the tertiary-alkylamine - dimethyl phosphate was smaller than that in Comparative Examples 4 to 8 where other phosphorus-containing additives were used. The composition of Comparative Example 8 is corresponding to that in Example 1 of JP 2008-239687 A.

The abrasion wear observed in Example 5 is the same as that in Example 2. The former employed the tertiary-alkylamine - dimethyl phosphate at a concentration of 5%, and the latter, 1%.

The abrasion wear observed in Examples 6 and 7 where the tertiary-alkylamine - dimethyl phosphate was used in combination with the Ca sulfonate and the abrasion wear observed in Example 8 where the tertiary-alkylamine - dimethyl phosphate was used in combination with the Zn sulfonate are found to be even smaller when compared with the case of Example 2 where the amine phosphate was used alone.

The phenylamine - phosphate is found to produce the same effect as that of the tertiary-alkylamine - dimethyl phosphate.

**[Table 1]**

| | | Example 1** | Example 2 | Example 3** | Example 4 | Example 5 | Example 6 | Example 7 | Example 8 |
|---|---|---|---|---|---|---|---|---|---|
| Thickener | Type | Aromatic diurea | Alicyclic aliphatic diurea | Li complex | Alicyclic aliphatic diurea | Alicyclic aliphatic diurea | Alicyclic aliphatic diurea | Alicyclic aliphatic diurea | Alicyclic aliphatic diurea |
| | Content (mass%) | 18.5 | 9.5 | 10.0 | 9.5 | 9.5 | 9.5 | 9.5 | 9.5 |
| Base oil | Type | Mineral oil | | | | | | | |
| Kinematic viscosity of base oil at 40°C (mm/s²) | | 60 | 60 | 60 | 60 | 60 | 60 | 60 | 60 |
| Additives (mass%) | Amine phosphate A*¹ | 1.0 | 1.0 | 1.0 | 0.05 | 5.0 | 1.0 | 1.0 | 1.0 |
| | Ca sulfonate A | - | - | - | - | - | 1.0 | - | - |
| | Ca sulfonate B | - | - | - | - | - | - | 1.0 | - |
| | Zn sulfonate | - | - | - | - | - | - | - | 1.0 |
| Worked penetration | | 300 | 300 | 300 | 300 | 300 | 300 | 300 | 300 |
| Abrasion wear (mg) | | 1.5 | 1.3 | 1.5 | 2.5 | 1.3 | 0.5 | 0.6 | 0.5 |

| | | | | | | | | | |
|---|---|---|---|---|---|---|---|---|---|
| * 1: Amine phosphate A = tertiary-alkyl - dimethyl phosphate ** represents reference example | | | | | | | | | |

**[Table 1-continued]**

| | | Example 9** | Example 10 | Example 11** | Example 12 | Example 13 | Example 14 | Example 15 | Example 16 |
|---|---|---|---|---|---|---|---|---|---|
| Thickener | Type | Aromatic diurea | Alicyclic aliphatic diurea | Li complex | Alicyclic aliphatic diurea | Alicyclic aliphatic diurea | Alicyclic aliphatic diurea | Alicyclic aliphatic diurea | Alicyclic aliphatic diurea |
| | Content (mass%) | 18.5 | 9.5 | 10.0 | 9.5 | 9.5 | 9.5 | 9.5 | 9.5 |
| Base oil | Type | Mineral oil | | | | | | | |
| Kinematic viscosity of base oil at 40°C (mm/s²) | | 60 | 60 | 60 | 60 | 60 | 60 | 60 | 60 |
| Additives (mass%) | Amine phosphate B*² | 1.0 | 1.0 | 1.0 | 0.05 | 5.0 | 1.0 | 1.0 | 1.0 |
| | Ca sulfonate A | - | - | - | - | - | 1.0 | - | - |
| | Ca sulfonate B | - | - | - | - | - | - | 1.0 | - |
| | Zn sulfonate | - | - | - | - | - | - | - | 1.0 |
| Worked penetration | | 300 | 300 | 300 | 300 | 300 | 300 | 300 | 300 |
| Abrasion wear (mg) | | 1.9 | 1.7 | 1.8 | 3.1 | 1.8 | 1.0 | 1.0 | 1.0 |

| | | | | | | | | | |
|---|---|---|---|---|---|---|---|---|---|
| *2: Amine phosphate B = phenylamine - phosphate ** represents reference example | | | | | | | | | |

**[Table 2]**

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|
| Thickener | Type | Aromatic diurea | Alicyclic aliphatic diurea | Li complex | Alicyclic aliphatic diurea | Alicyclic aliphatic diurea | Alicyclic aliphatic diurea | Alicyclic aliphatic diurea | Alicyclic aliphatic diurea |
| | Content (mass%) | 18.5 | 9.5 | 10.0 | 9.5 | 9.5 | 9.5 | 9.5 | 9.5 |
| Base oil | Type | Mineral oil | | | | | | | |
| Kinematic viscosity of base oil at 40°C (mm/s²) | | 60 | 60 | 60 | 60 | 60 | 60 | 60 | 60 |
| Additives (mass%) | Tricresyl phosphate | - | - | - | 1.0 | - | - | - | - |
| | Trioctyl phosphate | - | - | - | - | 1.0 | - | - | - |
| | Triphenylphosphorothioate | - | - | - | - | - | 1.0 | - | - |
| | Diphenylhydrogen phosphite | - | - | - | - | - | - | 1.0 | |
| | Alkylphosphorothioate + Fatty amine | - | - | - | - | - | - | - | 1.0 |
| Worked penetration | | 300 | 300 | 300 | 300 | 300 | 300 | 300 | 300 |
| Abrasion wear(mg) | | 8.5 | 7.5 | 7.3 | 6.1 | 6.0 | 6.5 | 5.5 | 4.5 |

## Claims

1. A grease composition comprising a thickener, a base oil and an amine phosphate, wherein the thickener includes an alicyclic aliphatic diurea compound represented by formula (1):
R¹-NHCONH-R²-NHCONH-R³ (1)
wherein R² is a bivalent aromatic hydrocarbon group having 6 to 15 carbon atoms; and R¹ represents an alkyl group having 6 to 30 carbon atoms and R³ represents cyclohexyl group; and
wherein the amine phosphate is contained in an amount of 0.05 to 10 mass% based on the total mass of the composition and the thickener is contained in an amount of 2 to 35 mass% based on the total mass of the composition.

2. The grease composition of claim 1, wherein the amine phosphate is tertiary alkylamine - dimethyl phosphate or phenylamine - phosphate.

3. The grease composition of claim 1 or 2, wherein the amine phosphate is contained in an amount of 0.10 to 7 mass% based on the total mass of the composition.

4. The grease composition of any one of claims 1 to 3, further comprising a metal salt of an organic sulfonic acid.

5. The grease composition of claim 4, wherein the metal salt of the organic sulfonic acid is a calcium salt or a zinc salt.

6. The grease composition of claim 5, wherein the metal salt of the organic sulfonic acid is a compound represented by formula (2):
[R⁴-SO₃]₂M (2)
wherein R⁴ is an alkyl group, alkenyl group, alkylnaphthyl group, dialkylnaphthyl group, alkylphenyl group or residual group of high-boiling petroleum distillate where the alkyl group or alkenyl group is a straight-chain or branched group having 2 to 22 carbon atoms; and M represents Ca or Zn.

7. The grease composition of any one of claims 4 to 6, wherein the metal salt of the organic sulfonic acid is contained in an amount of 0.05 to 10 mass% based on the total mass of the composition.

8. The grease composition of any one of claims 1 to 7, wherein the thickener includes a urea compound represented by formula (1-4) or (1-5):

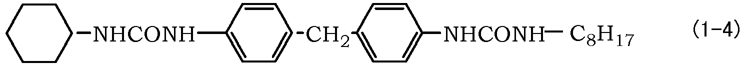

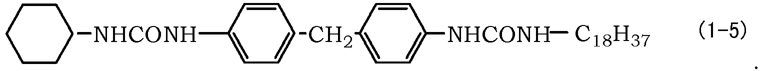

9. The grease composition of any one of claims 1 to 8, wherein the base oil is a mineral oil, a synthetic oil or a mixture thereof and has a kinematic viscosity at 40°C of 30 to 200 mm²/s.

10. A rolling bearing where the grease composition of any one of claims 1 to 9 is enclosed.

11. Use of a grease composition comprising a thickener, a base oil and an amine phosphate in an automotive hub unit bearing, wherein the grease composition is the grease composition of any one of claims 1 to 9.

## Patentansprüche

1. Fettzusammensetzung, die ein Verdickungsmittel, ein Basisöl und ein Aminphosphat umfasst, wobei das Verdickungsmittel eine alizyklische aliphatische Diharnstoffverbindung der Formel (1) umfasst:
R¹-NHCONH-R²-NHCONH-R³ (1)
worin R² eine zweiwertige Kohlenwasserstoffgruppe mit 6 bis 15 Kohlenstoffatomen ist; und R¹ für eine Alkylgruppe mit 6 bis 30 Kohlenstoffatomen steht; und R³ für eine Cyclohexylgruppe steht; und
wobei das Aminphosphat in einer Menge von 0,05 bis 10 Gew.-%, bezogen auf das Gesamtgewicht der Zusammensetzung, enthalten ist und das Verdickungsmittel in einer Menge von 2 bis 25 Gew.-%, bezogen auf das Gesamtgewicht der Zusammensetzung, enthalten ist.

2. Fettzusammensetzung nach Anspruch 1, wobei das Aminphosphat ein tertiäres Alkylamindimethylphosphat oder ein Phenylaminphosphat ist.

3. Fettzusammensetzung nach Anspruch 1 oder 2, wobei das Aminphosphat in einer Menge von 0,10 bis 7 Gew.-%, bezogen auf das Gesamtgewicht der Zusammensetzung, enthalten ist.

4. Fettzusammensetzung nach einem der Ansprüche 1 bis 3, die außerdem ein Metallsalz einer organischen Sulfonsäure umfasst.

5. Fettzusammensetzung nach Anspruch 4, wobei das Metallsalz der organischen Sulfonsäure ein Calciumsalz oder ein Zinksalz ist.

6. Fettzusammensetzung nach Anspruch 5, wobei das Metallsalz der organischen Sulfonsäure eine Verbindung der Formel (2) ist:
[R⁴-SO₃]₂M (2)
worin R⁴ eine Alkylgruppe, Alkenylgruppe, Alkylnaphthylgruppe, Dialkylnaphthylgruppe, Alkylphenylgruppe oder eine Gruppe von Rückständen von hochsiedendem Erdöldestillat ist, wobei die Alkylgruppe oder Alkenylgruppe eine unverzweigte oder verzweigte Gruppe mit 2 bis 22 Kohlenstoffatomen ist und M für Ca oder Zn steht.

7. Fettzusammensetzung nach einem der Ansprüche 4 bis 6, wobei das Metallsalz der organischen Sulfonsäure in einer Menge von 0,05 bis 10 Gew.-%, bezogen auf das Gesamtgewicht der Zusammensetzung, enthalten ist.

8. Fettzusammensetzung nach einem der Ansprüche 1 bis 7, wobei das Verdickungsmittel eine Harnstoffverbindung der Formel (1-4) oder (1-5) umfasst:

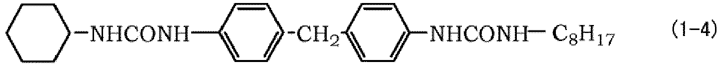

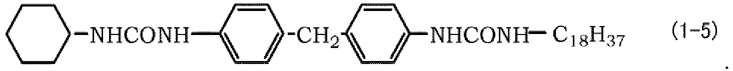

9. Fettzusammensetzung nach einem der Ansprüche 1 bis 8, wobei das Basisöl ein Mineralöl, ein synthetisches Öl oder ein Gemisch davon ist und bei 40 °C eine kinematische Viskosität von 30 bis 200 mm²/s aufweist.

10. Wälzlager, in dem eine Fettzusammensetzung nach einem der Ansprüche 1 bis 9 eingeschlossen ist.

11. Verwendung einer Fettzusammensetzung, die ein Verdickungsmittel, ein Basisöl und ein Aminphosphat umfasst, in einem Fahrzeugradnabeneinheitlager, wobei die Fettzusammensetzung eine Fettzusammensetzung nach einem der Ansprüche 1 bis 9 ist.

## Revendications

1. Composition de graisse comprenant un épaississant, une huile de base et un phosphate d'aminé, dans laquelle l'épaississant comprend un composé diurée aliphatique alicyclique représenté par la formule (1) :
R¹-NHCONH-R²-NHCONH-R³ (1)
dans laquelle R² est un groupe hydrocarboné aromatique divalent ayant 6 à 15 atomes de carbone ; et R¹ représente un groupe alkyle ayant 6 à 30 atomes de carbone et R³ représente un groupe cyclohexyle ; et
dans lequel le phosphate d'aminé est contenu en une quantité de 0,05 à 10 % en masse par rapport à la masse totale de la composition et l'épaississant est contenu en une quantité de 2 à 35 % en masse par rapport à la masse totale de la composition.

2. Composition de graisse selon la revendication 1, dans laquelle le phosphate d'aminé est un diméthylphosphate d'alkylamine tertiaire ou un phosphate de phénylamine.

3. Composition de graisse selon la revendication 1 ou 2, dans laquelle le phosphate d'aminé est contenu en une quantité de 0,10 à 7 % en masse par rapport à la masse totale de la composition.

4. Composition de graisse selon l'une quelconque des revendications 1 à 3, comprenant en outre un sel métallique d'un acide sulfonique organique.

5. Composition de graisse selon la revendication 4, dans laquelle le sel métallique de l'acide sulfonique organique est un sel de calcium ou un sel de zinc.

6. Composition de graisse selon la revendication 5, dans laquelle le sel métallique de l'acide sulfonique organique est un composé représenté par la formule (2) :
[R⁴-SO₃]₂M (2)
dans laquelle R⁴ est un groupe alkyle, un groupe alcényle, un groupe alkylnaphtyle, un groupe dialkylnaphtyle, un groupe alkylphényle ou un groupe résiduel d'un distillât du pétrole à point d'ébullition élevée, où le groupe alkyle ou groupe alcényle est un groupe linéaire ou ramifié ayant 2 à 22 atomes de carbone ; et M représente Ca ou Zn.

7. Composition de graisse selon l'une quelconque des revendications 4 à 6, dans laquelle le sel métallique de l'acide sulfonique organique est contenu en une quantité de 0,05 à 10 % en masse par rapport à la masse totale de la composition.

8. Composition de graisse selon l'une quelconque des revendications 1 à 7, dans laquelle l'épaississant comprend un composé urée représenté par la formule (1-4) ou (1-5) :

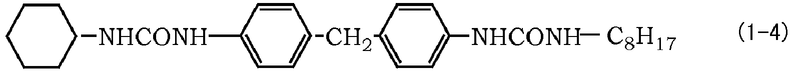

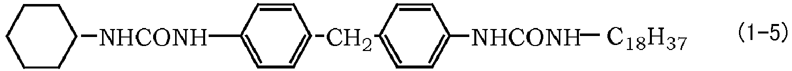

9. Composition de graisse selon l'une quelconque des revendications 1 à 8, dans laquelle l'huile de base est une huile minérale, une huile synthétique ou un mélange de celles-ci et a une viscosité cinématique à 40°C de 30 à 200 mm²/s.

10. Palier à roulement dans lequel est enfermée la composition de graisse de l'une quelconque des revendications 1 à 9.

11. Utilisation d'une composition de graisse comprenant un épaississant, une huile de base et un phosphate d'aminé dans un roulement de moyeu d'automobile, dans laquelle la composition de graisse est la composition de graisse de l'une quelconque des revendications 1 à 9.
